# FASCICULE DE BREVET EUROPEEN

(11) **EP 4 452 900 B1**
(45) Date de publication et mention de la délivrance du brevet: **03.12.2025**
(21) Numéro de dépôt: 22850733.1
(22) Date de dépôt: 23.12.2022
(51) Int. Cl.: C04B 41/45, C04B 41/00, C04B 41/87, C04B 35/117, C04B 35/443, C04B 35/622, H01M 4/485

(54) **CONTENEUR REVÊTU PAR UN REVÊTEMENT SPINELLE MGAL2O4 ET CORINDON**
MIT EINER MGAL2O4-SPINELLBESCHICHTUNG UND KORUND BESCHICHTETER BEHÄLTER
CONTAINER COATED WITH AN MGAL2O4 SPINEL COATING AND CORUNDUM

(30) Priorité: 23.12.2021 FR 2114402
(43) Date de publication de la demande: 30.10.2024
(73) Titulaire: SAINT-GOBAIN CENTRE DE RECHERCHES ET D'ETUDES EUROPEEN, 92400 Courbevoie (FR)
(72) Inventeur: BRULIN, Jérôme, 84306 Cavaillon CEDEX (FR); IONICA BOUSQUET, Costana Mihaela, 84306 Cavaillon CEDEX (FR); COEURET, Xavier, 84306 Cavaillon CEDEX (FR); VINCENT, Adrien, 84306 Cavaillon CEDEX (FR)
(74) Mandataire: Saint-Gobain Recherche
(86) Numéro de dépôt international: PCT/FR2022/052494
(87) Numéro de publication internationale: WO 2023/118766

(56) Documents cités:
- EP-A1- 0 005 482
- CN-A- 103 884 190
- CN-A- 108 083 823
- CN-A- 111 574 227
- CN-A- 112 979 294
- CN-A- 113 773 067
- FR-A1- 2 997 419

## Description

### Domaine technique

La présente invention se rapporte à un conteneur dont la surface des parois intérieures est au moins partiellement recouverte, de préférence pour plus de 80%, d'un revêtement et à l'utilisation dudit conteneur pour la fabrication d'une poudre d'oxydes comportant du lithium, en particulier un oxyde d'un métal ou de plusieurs métaux de transition lithiés.

### Technique antérieure

Les besoins en batteries lithium-ion sont en constante augmentation. Un bon nombre d'entre elles comportent une partie, en général la cathode, en un oxyde comportant du lithium, notamment un oxyde d'un métal ou de plusieurs métaux de transition lithiés, en particulier LiFePO₄ (ou LPF), LiMn₂O₄ (ou LMO), ou un oxyde de lithium-nickel-cobalt-manganèse (ou Li-NMC).

La cathode est en général fabriquée par mise en forme d'une poudre dudit oxyde d'un métal ou de plusieurs métaux de transition lithiés.

Parmi les procédés classiques de fabrication desdites poudres, on trouve la réalisation d'un mélange d'oxydes et/ou de différents précurseurs d'oxydes, suivi d'un traitement thermique permettant de réaliser une synthèse en phase solide de l'oxyde d'un métal ou de plusieurs métaux de transition lithiés. Lors dudit traitement thermique, le mélange est disposé dans un conteneur, généralement appelé « sagger » en anglais. Les conditions de synthèse desdites poudres, ainsi que ledit mélange, en particulier les éléments contenant le lithium, sont particulièrement sollicitants pour le conteneur.

CN103884190A et CN108083823A décrivent de tels conteneurs présentant un revêtement pour la fabrication de telles poudres.

Il existe un besoin pour augmenter la durée de vie desdits conteneurs.

Un but de l'invention est de répondre, au moins partiellement, à ce besoin.

### Exposé de l'invention

Selon l'invention, on atteint ce but au moyen d'un conteneur, la surface des parois intérieures dudit conteneur étant recouverte partiellement, de préférence pour plus de 80%, et de préférence sur la totalité desdites parois intérieures, d'un revêtement présentant les phases cristallisées suivantes, en pourcentage en masse sur la base de la masse totale des phases cristallisées :
- Spinelle MgAl₂O₄ : supérieure à 25% et jusqu'à 60%, et
- Phases cristallisées autres que spinelle MgAl₂O₄ et corindon : < 10%, et
- Corindon : complément à 100%.

Les inventeurs ont découvert que le conteneur revêtu selon invention présentait une dégradation plus faible lors de son utilisation, ce qui autorise une durée de vie plus importante, et notamment un nombre plus important de cycles de fabrication de poudre d'oxyde d'un métal ou de plusieurs métaux de transition lithiés.

Selon des modes de réalisation préférés mais non limitatifs de la présente invention, qui peuvent, le cas échéant, être combinés entre eux :
- le revêtement présente en pourcentage en masse sur la base des phases cristallisées, une teneur en spinelle supérieure à 30%, de préférence supérieure à 35% et/ou inférieure à 55%, de préférence inférieure à 50% ;
- le conteneur comporte plus de 90%, de préférence plus de 95%, de préférence plus de 99%, en masse, d'oxyde(s), de carbure(s), de nitrure(s), d'oxynitrure(s), de borure(s), et leurs mélanges ;
- le revêtement présente une épaisseur supérieure à 50 µm, de préférence supérieure à 100 µm, de préférence supérieure à 200 µm, de préférence supérieure à 300 µm et inférieure à 2000 µm, de préférence inférieure à 1500 µm, de préférence inférieure à 1000 µm, de préférence inférieure à 800 µm ;
- la surface des parois intérieures recouvertes comprend le fond dudit conteneur et la partie des côtés se trouvant au contact dudit fond ;
- la surface des parois intérieures est recouverte pour plus de 85%, de préférence pour plus de 90%, de préférence pour plus de 95% ;
- le revêtement s'étend sur sensiblement la totalité de la surface des parois intérieures dudit conteneur ;
- le conteneur comporte plus de 90%, de préférence plus de 95% en masse, d'oxyde(s),
- le conteneur comporte Al₂O₃, MgO, ZrO₂, SiO₂, Y₂O₃, et leurs mélanges ;
- le conteneur présente une teneur en Al₂O₃+MgO+ZrO₂+SiO₂+Y₂O₃ supérieure à 90%, de préférence supérieure à 95%, en pourcentage en masse sur la base des oxydes ;
- le conteneur présente une teneur en Al₂O₃ supérieure à 90%, de préférence supérieure à 95%, en pourcentage en masse sur la base des oxydes ;
- le conteneur présente une teneur en SiO₂ supérieure à 90%, de préférence supérieure à 95%, en pourcentage en masse sur la base des oxydes ;
- le conteneur présente une teneur en Al₂O₃ + MgO supérieure à 90%, de préférence supérieure à 95%, en pourcentage en masse sur la base des oxydes ;
- le conteneur présente une teneur en Al₂O₃ + Y₂O₃ supérieure à 90%, de préférence supérieure à 95%, en pourcentage en masse sur la base des oxydes ;
- le conteneur présente une teneur en Al₂O₃ + MgO + SiO₂ supérieure à 90%, de préférence supérieure à 95%, en pourcentage en masse sur la base des oxydes ;
- le conteneur présente une teneur en Al₂O₃ + ZrO₂+ SiO₂ supérieure à 90%, de préférence supérieure à 95%, en pourcentage en masse sur la base des oxydes ;
- le conteneur présente une teneur en Al₂O₃ + ZrO₂ supérieure à 90%, de préférence supérieure à 95%, en pourcentage en masse sur la base des oxydes ;
- le conteneur présente une teneur en Al₂O₃ + SiO₂ supérieure à 90%, de préférence supérieure à 95%, en pourcentage en masse sur la base des oxydes ;
- le conteneur comporte plus de 90%, de préférence plus de 95%, en pourcentages en masse sur la base de la masse des phases cristallisées, de corindon, de spinelle MgAl₂O₄, de cordiérite, de mullite, de zircone, optionnellement stabilisée, de périclase, et leurs mélanges ;
- le conteneur comporte plus de 90%, de préférence plus de 95%, en pourcentages en masse, au total et sur la base de la masse des phases cristallisées, de corindon ou de mullite ou d'un mélange de corindon et de cordiérite ou d'un mélange de corindon et de mullite ou d'un mélange de corindon et de spinelle MgAl₂O₄ ou d'un mélange de corindon et de cordiérite et de spinelle, ou d'un mélange de corindon et de zircone ou d'un mélange de corindon et de mullite et de zircone ou d'un mélange de cordiérite et de mullite ;
- le conteneur comporte plus de 90%, de préférence plus de 95% en masse, de carbure(s), de nitrure(s), d'oxynitrure(s), de borures et leurs mélanges ;
- le conteneur comporte plus de 90%, de préférence plus de 95% en masse, de préférence de carbure(s), de nitrure(s), de SiAlON et leurs mélanges ;
- le conteneur comporte plus de 90%, de préférence plus de 95%, en masse, de carbure de silicium, de nitrure de silicium, de SiAlON, et leurs mélanges. ;
- le conteneur comporte plus de 90%, de préférence plus de 95%, en masse, d'un mélange de carbure de silicium et de nitrure de silicium ;
- le conteneur présente un périmètre choisi parmi un polygone, un cercle ou une ellipse ;
- le conteneur comporte un fond et au moins un côté, de préférence présentant une épaisseur moyenne inférieure à 20 mm et supérieure à 2 mm ;
- le conteneur présente un volume supérieur à 0,1 litre et inférieur à 25 litres.

L'invention concerne aussi l'utilisation d'un conteneur revêtu selon l'invention pour la fabrication d'une poudre d'oxyde comportant du lithium, en particulier un oxyde d'un métal ou de plusieurs métaux de transition lithiés.

### Définitions

- Par « céramique », on entend un produit qui n'est ni métallique, ni organique. Dans le cadre de la présente invention, le carbone est considéré comme un produit céramique.
- Par « revêtement », on entend une couche de matériau(x) de nature différente du support qu'est le conteneur.
- Par « précurseur » d'un oxyde cristallisé, on entend un ou plusieurs matériaux, qui vont conduire, après traitement thermique à une température supérieure à 1100°C, de préférence sous air, audit oxyde cristallisé. Par exemple, un précurseur de corindon peut être une alumine de transition ou une boehmite ou un tri-hydroxyde d'aluminium.
- Dans un souci de clarté, on utilise les formules chimiques des oxydes simples pour désigner les teneurs de ces oxydes dans une composition. Par exemple, « MgO » ou « Al₂O₃ » désignent les teneurs en ces oxydes simples dans la composition considérée, alors que « magnésie », et « alumine » sont utilisés pour désigner la présence effective des phases de ces oxydes constituées de MgO et Al₂O₃, respectivement.
- Par « corindon », on entend classiquement une alumine sous la forme cristallographique rhomboédrique.
- Un « sialon », SiAlON, est un composé d'oxynitrure d'au moins les éléments Si, Al et N, en particulier d'un composé respectant l'une des formules suivantes :
   - SiₓAl_{y}OᵤNᵥ, dans laquelle :
      - x est supérieur ou égal à 0, supérieur à 0,05, supérieur à 0,1 ou supérieur à 0,2, et inférieur ou égal à 1, inférieur ou égal à 0,8 ou inférieur ou égal à 0,4,
      - y est supérieur ou égal à 0, ou supérieur à 0,1, supérieur à 0,3 ou supérieur à 0,5, et inférieur ou égal à 1,
      - u est supérieur à 0, supérieur à 0,1 ou supérieur à 0,2, et inférieur ou égal à 1 ou inférieur ou égal à 0,7,
      - v est supérieur à 0, supérieur à 0,1, supérieur à 0,2 ou supérieur à 0,5, ou supérieur à 0,7, et inférieur ou égal à 1,
      - x+y > 0,
      x, y, u et v étant des indices stœchiométriques et normalisés par rapport à celui qui est le plus élevé, rendu égal à 1 ;
   - MeₓSi₁₂₋₍ₘ₊ₙ₎Al₍ₘ₊ₙ₎OₙN₁₆₋ₙ, avec 0 ≤ x ≤ 2, Me un cation choisi parmi les cations de lanthanides, Fe, Y, Ca, Li et leurs mélanges, 0 ≤ m ≤ 12, 0 ≤ n ≤ 12 et 0 < n+m ≤ 12, généralement appelés « α'-SiAlON » ou « SiAlON-α'»
- Sauf mention contraire, toutes les teneurs en oxydes sont des pourcentages massiques sur la base des oxydes. Une teneur massique d'un oxyde d'un élément métallique se rapporte à la teneur totale de cet élément exprimée sous la forme de l'oxyde le plus stable, selon la convention habituelle de l'industrie.
- La somme de teneurs d'oxydes n'implique pas la présence de tous ces oxydes.
- « comporter » ou « comprendre » doivent être interprétés de manière non limitative, dans le sens ou d'autres éléments que ceux indiqués peuvent être présents.

### Description détaillée

### Conteneur

Le conteneur est de préférence en céramique.

De préférence, le conteneur comporte plus de 90%, de préférence plus de 95%, de préférence plus de 99%, de préférence plus de 99,5%, en masse, d'oxyde(s), de carbure(s), de nitrure(s), d'oxynitrure(s), de borure(s), et leurs mélanges.

De préférence, le conteneur comporte plus de 90%, de préférence plus de 95%, de préférence plus de 99%, de préférence plus de 99,5%, en masse :
- d'oxyde(s), ou
- de carbure(s), de nitrure(s), d'oxynitrure(s), de borures et leurs mélanges, de préférence de carbure(s), de nitrure(s), d'oxynitrure(s) et leurs mélanges, de préférence de carbure(s), de nitrure(s), de SiAlON et leurs mélanges, de préférence de carbure(s), de nitrure(s) et leurs mélanges, de préférence de carbure de silicium, de nitrure de silicium et leurs mélanges.

Dans un premier mode de réalisation, le conteneur comporte plus de 90%, de préférence plus de 95%, de préférence plus de 99%, de préférence plus de 99,5%, en masse d'oxyde(s).

De préférence le ou lesdits oxydes sont choisis parmi ou comportent Al₂O₃, MgO, ZrO₂, SiO₂, Y₂O₃, et leurs mélanges.

De préférence, le conteneur présente une teneur en Al₂O₃+MgO+ZrO₂+SiO₂+Y₂O₃ supérieure à 90%, de préférence supérieure à 95%, de préférence supérieure à 98%, en pourcentage en masse sur la base des oxydes.

De préférence, le conteneur présente une teneur en Al₂O₃+MgO+ZrO₂+SiO₂ supérieure à 90%, de préférence supérieure à 95%, de préférence supérieure à 98%, en pourcentage en masse sur la base des oxydes.

De préférence encore, le conteneur présente une teneur en Al₂O₃+MgO+SiO₂ supérieure à 90%, de préférence supérieure à 95%, de préférence supérieure à 98%, en pourcentage en masse sur la base des oxydes.

Dans un mode de réalisation dudit premier mode de réalisation, le conteneur présente une teneur en Al₂O₃ supérieure à 90%, de préférence supérieure à 95%, de préférence supérieure à 98%, de préférence supérieure à 99%, en pourcentage en masse sur la base des oxydes.

Dans un mode de réalisation dudit premier mode de réalisation, le conteneur présente une teneur en SiO₂ supérieure à 90%, de préférence supérieure à 95%, de préférence supérieure à 98%, de préférence supérieure à 99%, en pourcentage en masse sur la base des oxydes.

Dans un mode de réalisation dudit premier mode de réalisation, le conteneur présente une teneur en Al₂O₃ + MgO supérieure à 90%, de préférence supérieure à 95%, de préférence supérieure à 98%, de préférence supérieure à 99%, en pourcentage en masse sur la base des oxydes.

Dans un mode de réalisation dudit premier mode de réalisation, le conteneur présente une teneur en Al₂O₃ + Y₂O₃ supérieure à 90%, de préférence supérieure à 95%, de préférence supérieure à 98%, de préférence supérieure à 99%, en pourcentage en masse sur la base des oxydes.

Dans un mode de réalisation dudit premier mode de réalisation, le conteneur présente une teneur en Al₂O₃ + MgO + SiO₂ supérieure à 90%, de préférence supérieure à 95%, de préférence supérieure à 98%, de préférence supérieure à 99%, en pourcentage en masse sur la base des oxydes.

Dans un mode de réalisation dudit premier mode de réalisation, le conteneur présente une teneur en Al₂O₃ + ZrO₂+ SiO₂ supérieure à 90%, de préférence supérieure à 95%, de préférence supérieure à 98%, de préférence supérieure à 99%, en pourcentage en masse sur la base des oxydes.

Dans un mode de réalisation dudit premier mode de réalisation, le conteneur présente une teneur en Al₂O₃ + ZrO₂ supérieure à 90%, de préférence supérieure à 95%, de préférence supérieure à 98%, de préférence supérieure à 99%, en pourcentage en masse sur la base des oxydes.

Dans un mode de réalisation dudit premier mode de réalisation, le conteneur présente une teneur en Al₂O₃ + SiO₂ supérieure à 90%, de préférence supérieure à 95%, de préférence supérieure à 98%, de préférence supérieure à 99%, en pourcentage en masse sur la base des oxydes.

De préférence, le conteneur comporte plus de 90%, de préférence plus de 95%, au total, en pourcentages en masse sur la base de la masse des phases cristallisées, de corindon, de spinelle MgAl₂O₄, de cordiérite, de mullite, de zircone, optionnellement stabilisée, de périclase, et leurs mélanges. De préférence encore, le conteneur comporte plus de 90%, de préférence plus de 95%, de préférence plus de 99%, de préférence plus de 99,5%, au total, en pourcentages en masse sur la base de la masse des phases cristallisées, de corindon, de spinelle MgAl₂O₄, de cordiérite, de mullite, de zircone, optionnellement stabilisée, et leurs mélanges.

De préférence, le conteneur comporte plus de 90%, de préférence plus de 95%, en pourcentages en masse sur la base de la masse des phases cristallisées, de corindon ou de mullite ou d'un mélange de corindon et de cordiérite ou d'un mélange de corindon et de mullite ou d'un mélange de corindon et de spinelle MgAl₂O₄ ou d'un mélange de corindon et de cordiérite et de spinelle, ou d'un mélange de corindon et de zircone ou d'un mélange de corindon et de mullite et de zircone ou d'un mélange de cordiérite et de mullite.

Dans un deuxième mode de réalisation, le conteneur comporte plus de 90%, de préférence plus de 95%, de préférence plus de 99%, de préférence plus de 99,5%, de carbure(s), de nitrure(s), d'oxynitrure(s), de borures et leurs mélanges, de préférence de carbure(s), de nitrure(s), d'oxynitrure(s) et leurs mélanges, de préférence de carbure(s), de nitrure(s), de SiAlON et leurs mélanges.

De préférence, le conteneur comporte plus de 90%, de préférence plus de 95%, de préférence plus de 98%, de préférence plus de 99%, en masse, de carbure de silicium, de nitrure de silicium, de SiAlON, et leurs mélanges.

Dans un mode de réalisation dudit deuxième mode de réalisation, le conteneur comporte plus de 90% de carbure de silicium et le complément comporte du silicium métallique.

De préférence encore, le conteneur comporte plus de 90%, de préférence plus de 95%, de préférence plus de 98%, de préférence plus de 99%, en masse, de carbure de silicium, de nitrure de silicium, et leurs mélanges.

Dans un mode de réalisation dudit deuxième mode de réalisation, le conteneur comporte plus de 90%, de préférence plus de 95%, de préférence plus de 98%, de préférence plus de 99%, en masse, de carbure de silicium.

Dans un mode de réalisation dudit deuxième mode de réalisation, le conteneur comporte plus de 90%, de préférence plus de 95%, de préférence plus de 98%, de préférence plus de 99%, en masse, d'un mélange de carbure de silicium et de nitrure de silicium, de préférence, le rapport massique de la quantité de carbure de silicium sur la quantité de nitrure de silicium étant supérieure à 1, de préférence supérieure à 2 et inférieur à 10, de préférence inférieur à 8, de préférence inférieur à 6.

De préférence, le conteneur comporte plus de 90%, de préférence plus de 95%, au total, en pourcentages en masse sur la base de la masse des phases cristallisées :
- de corindon, de spinelle MgAl₂O₄, de cordiérite, de mullite, de zircone, optionnellement stabilisée, de périclase, et leurs mélanges, de préférence de corindon, de spinelle MgAl₂O₄, de cordiérite, de mullite, de zircone, optionnellement stabilisée, et leurs mélanges, de préférence de corindon, de spinelle, de cordiérite et leurs mélange, ou
- de carbure de silicium, de nitrure de silicium, et leurs mélanges.

Le conteneur peut présenter une forme quelconque.

Le périmètre dudit conteneur selon l'invention peut être choisi parmi un polygone, en particulier un rectangle et un carré, un cercle ou une ellipse.

De préférence, le conteneur selon l'invention comporte un fond et au moins un côté, de préférence présentant une épaisseur moyenne, de préférence inférieure à 20 mm, de préférence inférieure à 15 mm, voire inférieure à 10 mm, ou/ou de préférence supérieure à 2 mm, de préférence supérieure à 4 mm, de préférence supérieure à 5 mm.

Dans un mode de réalisation, le fond dudit conteneur présente une épaisseur plus importante que celle de son côté, de préférence 10% supérieure, de préférence 20% supérieure, de préférence 30% supérieure.

Dans un mode de réalisation, le fond et le côté dudit conteneur présentent une différence d'épaisseur inférieure à 10%, de préférence inférieure à 5%. De préférence, dans ledit mode de réalisation, le fond dudit conteneur présente une épaisseur sensiblement identique à celle de son côté.

Dans un mode de réalisation, l'épaisseur des parois n'est pas constante. De préférence, l'épaisseur des côtés est plus importante du côté du fond de conteneur. De préférence, la partie des côtés se trouvant au contact du fond du conteneur présente une épaisseur supérieure de 10% à l'épaisseur de la partie des côtés situés à l'opposé du fond du conteneur. Dans un mode de réalisation, le conteneur présente une longueur, c'est-à-dire une plus grande longueur inférieure à 500 mm, de préférence inférieure à 400 mm, ou/ou de préférence supérieure à 100 mm, de préférence supérieure à 200 mm, et une largeur, c'est-à-dire la plus petite dimension mesurée perpendiculairement à la longueur inférieure à 500 mm, de préférence inférieure à 400 mm, ou/ou de préférence supérieure à 100 mm, de préférence supérieure à 200 mm.

Dans un mode de réalisation, l'angle entre le fond du conteneur et ledit au moins un côté est égal à 90°. Dans un mode de réalisation ledit angle est supérieur à 90° et inférieur à 100°.

Dans un mode de réalisation, le conteneur présente un diamètre inférieur à 500 mm, de préférence inférieur à 400 mm, ou/ou de préférence supérieur à 100 mm, de préférence supérieur à 200 mm.

De préférence, le conteneur présente un volume supérieur à 0,1 litre, de préférence supérieur à 1 litre, de préférence supérieur à 2 litres, de préférence supérieur à 3 litres et/ou de préférence inférieur à 25 litres, de préférence inférieur à 20 litres, de préférence inférieur à 15 litres.

Dans un mode de réalisation préféré, le fond et les côtés du conteneur forment un ensemble monolithique. Autrement dit, lesdits fond et côtés sont une seule et même pièce, le raccordement entre le fond et les côtés comportant un rayon, de préférence supérieur à 5 mm, de préférence supérieur à 10 mm, de préférence supérieur à 20 mm.

Dans un mode de réalisation, le conteneur est un assemblage de différentes parties, par exemple des plaques, la liaison entre lesdites différentes parties pouvant notamment être réalisées à l'aide d'assemblage de type tenon-mortaise, et/ou d'assemblage en suspente, et/ou d'encastrement (utilisant notamment des encoches ou des rainures), et/ou de chevilles céramiques, et/ou de vis céramiques et/ou de rivets céramiques, et/ou de clavettes céramiques.

### Revêtement

Le revêtement présente les phases cristallisées suivantes, en pourcentage en masse sur la base des phases cristallisées :
- Spinelle MgAl₂O₄ : plus de 25% et jusqu'à 60%, et
- Phases cristallisées autres que spinelle MgAl₂O₄ et corindon : < 10%
- Corindon : complément à 100%.

Les phases cristallisées présentes dans le revêtement peuvent classiquement être mises en évidence par diffraction des rayons X sur ledit revêtement.

L'acquisition du diagramme de diffraction est réalisée avec un appareil du type D8 Endeavor de la société Bruker, sur un domaine angulaire 2θ compris entre 5° et 80°, avec un pas de 0,01°, et un temps de comptage de 0,34 s/pas. L'optique avant comporte une fente primaire de 0,3° et une fente de Soller de 2,5°. L'échantillon est en rotation sur lui-même à une vitesse égale à 5 tr/min, avec utilisation du couteau automatique. L'optique arrière comporte une fente de Soller de 2,5°, un filtre nickel de 0,0125 mm et un détecteur 1D avec une ouverture égale à 4°.

Les diagrammes de diffraction sont ensuite analysés qualitativement à l'aide du logiciel EVA et de la base de données ICDD2016.

Une fois les phases présentes mises en évidence, les diagrammes de diffraction sont analysés quantitativement avec le logiciel High Score Plus par affinement Rietveld selon la stratégie suivante :
- Un affinement du signal de fond est réalisé à l'aide de la fonction « treatment », « determine background » avec les choix suivants : « bending factor » égal à 1 et « granularity » égal à 40 ;
- Classiquement, les fiches ICDD des phases présentes mises en évidence et quantifiables sont sélectionnées, et donc prises en compte dans l'affinement ;
- Un affinement automatique est ensuite réalisé en sélectionnant le signal de fond déterminé précédemment « use available background » et en sélectionnant le mode « automatic : option phase fit-default Rietveld » ;
- Un affinement manuel du paramètre « B overall » de toutes les phases sélectionnées est ensuite effectué de manière simultanée.

Les inventeurs ont mis en évidence qu'un tel revêtement permettait d'augmenter la durée de vie du conteneur lors de la fabrication d'une poudre d'oxydes comportant du lithium, en particulier un oxyde d'un métal ou de plusieurs métaux de transition lithiés.

Les inventeurs ont également mis en évidence qu'un revêtement présentant une teneur en spinelle MgAl₂O₄ supérieure à 60% présentait une fissuration et/ou un décollement de la surface du conteneur lors de la montée à la température d'utilisation qui ne permettait pas au conteneur présentant un tel revêtement de présenter une durée de vie améliorée.

Un conteneur revêtu comportant un revêtement présentant une teneur en spinelle MgAl₂O₄ inférieure à 10% ne présente pas une durée de vie améliorée.

De préférence, le revêtement présente une teneur en spinelle MgAl₂O₄ supérieure à 30%, de préférence supérieure à 35%, et de préférence inférieure à 55%, de préférence inférieure à 50%, en pourcentage en masse sur la base des phases cristallisées.

De préférence, le revêtement présente une teneur en phases cristallisées autres que spinelle MgAl₂O₄ et corindon inférieure à 8%, de préférence inférieure à 5%, en pourcentage en masse sur la base des phases cristallisées. De préférence, le revêtement présente une teneur en phases cristallisées autres que spinelle MgAl₂O₄ et corindon sensiblement nulle.

De préférence, le revêtement présente une quantité de phases amorphes inférieure à 10%, de préférence inférieure à 5%, de préférence sensiblement nulle.

De préférence, le revêtement présente la composition chimique suivante, en pourcentage en masse sur la base des oxydes :
- MgO : > 2,8%, de préférence > 4%, de préférence > 5,5%, de préférence > 7%, de préférence > 8,5%, et de préférence < 16,9%, de préférence < 15,5%, de préférence < 14%, et/ou
- Al₂O₃ : > 73,1%, de préférence > 75%, de préférence > 78%, de préférence > 80%, de préférence > 83%, et de préférence < 97%, de préférence < 95%, de préférence < 92%, de préférence < 90%, et/ou
- Oxydes autres que MgO et Al₂O₃ : <10%, de préférence < 8%, de préférence < 6%, de préférence < 5%, de préférence < 3%, de préférence < 1%, de préférence < 0,5%.

De préférence, le revêtement est constitué pour plus de 90%, de préférence pour plus de 95%, de préférence pour plus de 98%, de préférence pour plus de 99%, de préférence pour plus de 99,5% en masse d'oxydes. De préférence le revêtement est essentiellement constitué d'oxydes.

L'épaisseur dudit revêtement est de préférence supérieure à 50 µm, de préférence supérieure à 100 µm, de préférence supérieure à 200 µm, de préférence supérieure à 300 µm, voire supérieure à 400 µm, voire supérieure à 500 µm, voire supérieure à 600 µm et/ou de préférence inférieure à 2000 µm, de préférence inférieure à 1500 µm, de préférence inférieure à 1000 µm, de préférence inférieure à 800 µm.

De préférence, la surface des parois intérieures recouvertes comprend le fond du conteneur et la partie des côtés se trouvant au contact dudit fond. Autrement dit, le revêtement s'étend sur la partie inférieure intérieure des côtés du conteneur, le conteneur étant considéré dans sa position de fonctionnement, ladite partie étant celle en contact avec les poudres lors de l'utilisation dudit conteneur.

De préférence, la surface des parois intérieures du conteneur est recouverte pour plus de 85%, de préférence pour plus de 90%, de préférence pour plus de 95%, de préférence pour plus de 96%, de préférence pour plus de 98%, de préférence pour plus de 99% dudit revêtement. De préférence le revêtement s'étend sur sensiblement la totalité de la surface des parois intérieures du conteneur.

De préférence, au moins une partie, de préférence la totalité de la surface de la paroi extérieure du fond est recouverte du revêtement.

Dans un mode de réalisation, plus de 90%, de préférence plus de 95%, de préférence plus de 99%, de la surface totale des parois du conteneur est recouverte du revêtement.

Le revêtement peut être appliqué sur au moins une partie de la surface des parois intérieures du conteneur selon toute technique connue de l'homme du métier, en particulier par application au pinceau, par pulvérisation, en particulier une pulvérisation humide, par imprégnation sous vide, par immersion. De préférence le revêtement est par pulvérisation humide d'une suspension comportant une ou plusieurs poudres de spinelle MgAl₂O₄ et une ou plusieurs poudres de corindon ou de précurseur de corindon. De préférence, la suspension ne comporte pas de poudres de précurseur de corindon.

De préférence le revêtement a subi un traitement thermique avant son utilisation, la température maximale atteinte lors dudit traitement thermique étant de préférence supérieure à 1100°C, de préférence supérieure à 1200°C, et de préférence inférieure à 1500°C, de préférence inférieure à 1400°C.

De préférence le temps de maintien à ladite température maximale est supérieur à 0,5 heures, et inférieur à 5 heures, de préférence inférieur à 2 heures.

### Exemples

Les exemples non limitatifs suivants sont donnés dans le but d'illustrer l'invention.

### Protocole de fabrication des exemples

Pour fabriquer les exemples, des carreaux de dimensions 50 x 50 x 10 mm³ sont usinés sur les 6 faces dans des plaques de produit N-Durance commercialisé par la société Saint-Gobain Performance Ceramics and Refractories.

Une grande face de chaque carreau est ensuite revêtue par pulvérisation humide d'une suspension.

Les suspensions permettant d'obtenir les différents revêtements sont fabriquées de la manière suivante.

Un mélange M de poudres d'alumine de pureté massique supérieure à 99% et d'une poudre d'hydroxyde d'aluminium est réalisé. Ledit mélange M présente une taille médiane D₅₀ égale à 7 µm et un D₉₀ égal à 51 µm.

Des mélanges sont ensuite réalisés, conformément au tableau 1 suivant, en pourcentages massiques.

**[Tableau 1]**

| | Mélange pour le revêtement de l'exemple 1 | Mélange pour le revêtement de l'exemple 2 | Mélange pour le revêtement de l'exemple 3 | Mélange pour le revêtement de l'exemple 4 |
|---|---|---|---|---|
| Mélange M | 100 | 85 | 70 | 55 |
| Poudre de spinelle AR78, -90 µm commercialisée par la société Almatis | 0 | 15 | 30 | 45 |

Puis, à chaque mélange sont ajoutés 0,3% de silicate de sodium, 0,5% d'une solution d'un stabilisant permettant d'éviter une ségrégation dans le revêtement lors de son application sur les carreaux, et des billes d'alumine, les pourcentages de silicate de sodium et de ladite suspension de stabilisant étant des pourcentages massiques sur la base de la masse totale du mélange M et de la poudre de spinelle.

L'ensemble est disposé dans un bidon est mis en rotation sur un tourne jarre pendant 10 minutes afin de mélanger les différents ingrédients.

Puis, on ajoute dans le bidon 40% d'eau et 2,5% d'une dispersion adhésive, permettant notamment d'atteindre une résistance à l'abrasion du revêtement suffisante, les pourcentages étant des pourcentages massiques sur la base de la masse totale du mélange M et de la poudre de spinelle.

Le bidon est refermé et est ensuite mis en rotation sur un tourne jarre pendant 8 heures de manière à obtenir une suspension homogène.

Les billes sont ensuite séparées de la suspension par tamisage.

La suspension est ensuite disposée dans un pistolet à air comprimé et projetée sur une grande face d'un carreau, de manière à obtenir un revêtement d'épaisseur sensiblement uniforme et égale à 300 µm après l'étape de consolidation par frittage.

Puis le carreau revêtu est séché dans une étuve pendant 12 heures à 70°C.

Enfin, le carreau revêtu subit le traitement thermique de consolidation suivant, en four électrique, sous air :
- Montée à 1450°C à une vitesse égale à 300 °C/h,
- Maintien à 1450°C pendant 1 heure,
- Descente à 500 °C à une vitesse égale à 300 °C/h, puis descente libre.

Les carreaux revêtus ainsi obtenus subissent ensuite le test résistance à la dégradation décrit ci-après :
La résistance à la dégradation par une poudre d'un oxyde de lithium-nickel-cobalt-manganèse Li-NMC est évaluée sur les carreaux revêtus précédemment décrits selon les exemples 1 à 4, la surface du carreau en contact avec la poudre étant la surface présentant le revêtement précédemment décrit.

La poudre d'un oxyde de lithium-nickel-cobalt-manganèse utilisée est fabriquée de la manière suivante :
Une poudre de Ni_{0,8}Co_{0,1}Mn_{0,1}(OH)₂ est obtenue par coprécipitation d'une solution aqueuse de nitrate de nickel, de nitrate de cobalt et de nitrate de manganèse, présents en un rapport stœchiométrique 0,8:0,1:0,1, à l'aide d'un ajout de NaOH et de NH₄OH, à une température égale à 50°C, sous agitation.

Après séchage du précipité, LiOH.H₂O est ajouté à la poudre de Ni_{0,8}Co_{0,1}Mn_{0,1}(OH)₂ dans un rapport molaire LiOH.H₂O sur Ni_{0,8}Co_{0,1} Mn_{0,1}(OH)₂ égal à 1,03, l'ensemble étant ensuite mélangé vigoureusement.

Puis, l'ensemble est ensuite traité thermiquement à 480 °C pendant 4 heures.

La poudre obtenue après traitement thermique est émottée dans un mortier agate. La poudre obtenue à l'issu de l'émottage est la poudre utilisée dans l'essai de résistance à la dégradation.

Pour chaque exemple, 4,5 g de ladite poudre sont disposés sur la partie centrale du carreau à tester, en prenant soin de ne pas recouvrir de poudre la surface de la périphérie dudit carreau.

Les carreaux sont ensuite enfournés dans un four tubulaire électrique, le tube étant en alumine, pour subir le cycle de traitement thermique suivant :
- Montée jusqu'à 800°C à une vitesse égale à 200°C/h
- Maintien de la température à 800°C pendant 10 heures
- Descente jusqu'à 500°C avec une vitesse égale à 200°C/h, puis descente libre jusqu'à la température ambiante.

Pendant tout le traitement thermique, une circulation d'oxygène est mise en place dans le tube, avec un débit égal à 20 l / min.

Les carreaux sont ensuite défournés. La poudre présente sur le dessus du carreau est éliminée, et 4,5 g de poudre neuve sont à nouveau disposés sur la partie centrale du carreau à tester, en prenant soin de ne pas recouvrir de poudre la surface de la périphérie dudit carreau. Les carreaux sont ensuite enfournés dans le four tubulaire électrique, le tube étant en alumine, pour subir un deuxième cycle de traitement thermique identique au premier.

Les carreaux sont ensuite défournés. La poudre présente sur le dessus du carreau est éliminée. Le même protocole que précédemment décrit est répété encore trois fois de manière que chaque carreau subisse au total cinq cycles de traitement thermique en présence de la poudre décrite précédemment.

Les carreaux sont ensuite défournés et chaque carreau est découpé de manière à obtenir une tranche de la zone centrale dudit carreau. Ladite tranche est enrobée de résine et polie miroir. Puis chaque échantillon poli est observé à l'aide d'un microscope électrique à balayage, en utilisant des grossissements compris entre x200 et x500.

Le tableau 2 suivant résume les résultats obtenus.

**[Tableau 2]**

| Exemple | Quantité de spinelle dans le revêtement, en pourcentage massique | Etat visuel du revêtement après le test de résistance à la dégradation |
|---|---|---|
| 1 | 0 | Le revêtement a quasiment complètement disparu |
| 2 | 15 | Plusieurs fissures présentes de la surface extérieure du revêtement jusqu'à l'interface revêtement - carreau support |
| 3 | 30 | Quelques fissures présentes sur la surface extérieure du revêtement et ne se prolongeant pas jusqu'à l'interface revêtement - carreau support |
| 4 | 45 | Pas de fissure |

Une comparaison des exemples 1, et 2 à 4, montre que le revêtement des exemples 2 à 4 est encore présent après l'essai de résistance à la dégradation, contrairement au revêtement de l'exemple 1 qui a quasiment complètement disparu.

Une comparaison des exemples 2 à 4 montre cependant que le revêtement de l'exemple 2, qui présente une quantité de spinelle égale à 15%, comporte plusieurs fissures, présentes de la surface extérieure du revêtement jusqu'à l'interface revêtement - carreau support.

Le revêtement de l'exemple 3, présentant une quantité de spinelle égale à 30%, présente, après essai de résistance à la dégradation, quelques fissures présentes sur la surface extérieure du revêtement et ne se prolongeant pas jusqu'à l'interface revêtement - carreau support

Le revêtement de l'exemple 4 présentant une quantité de spinelle égale à 45%, présente la meilleure résistance, aucune fissure n'étant visible après essai de résistance à la dégradation. Ces résultats montrent l'efficacité d'un conteneur selon l'invention.

Bien entendu, la présente invention n'est pas limitée aux modes de réalisation décrits fournis à titre d'exemples illustratifs et non limitatifs.

En particulier, les produits selon l'invention ne se limitent pas à des formes ou à des dimensions particulières.

## Revendications

1. Conteneur pour la fabrication d'une poudre d'oxyde comportant du lithium, dont la surface des parois intérieures est recouverte au moins partiellement, de préférence pour plus de 80%, d'un revêtement présentant les phases cristallisées suivantes, en pourcentage et sur la base de la masse totale des phases cristallisées :
- Spinelle MgAl₂O₄ : plus de 25% et jusqu'à 60%, et
- Phases cristallisées autres que spinelle MgAl₂O₄ et corindon : < 10%
- Corindon : complément à 100%.

2. Conteneur selon la revendication précédente :
- dans lequel le revêtement présente en pourcentage en masse sur la base des phases cristallisées, une teneur en spinelle supérieure à 30% et/ou inférieure à 55%, et/ou
- comportant plus de 90%, en masse, d'oxyde(s), de carbure(s), de nitrure(s), d'oxynitrure(s), de borure(s), et leurs mélanges, et/ou
- dans lequel l'épaisseur dudit revêtement est supérieure à 50 µm et inférieure à 2000 µm, et/ou
- dont la surface des parois intérieures recouvertes par ledit revêtement comprend le fond dudit conteneur et la partie des côtés se trouvant au contact dudit fond, et/ou
- dont la surface des parois intérieures est recouverte pour plus de 85% par ledit revêtement.

3. Conteneur selon la revendication 1 ou 2 :
- dans lequel le revêtement présente en pourcentage en masse sur la base des phases cristallisées, une teneur en spinelle supérieure à 35% et/ou inférieure à 50%, et/ou
- comportant plus de 95%, en masse, d'oxyde(s), de carbure(s), de nitrure(s), d'oxynitrure(s), de borure(s), et leurs mélanges, et/ou
- dans lequel l'épaisseur dudit revêtement est supérieure à 100 µm et inférieure à 1500 µm, et/ou
- dont la surface des parois intérieures est recouverte pour plus de 90% par ledit revêtement.

4. Conteneur selon l'une des revendications 1 à 3 :
- comportant plus de 99%, en masse, d'oxyde(s), de carbure(s), de nitrure(s), d'oxynitrure(s), de borure(s), et leurs mélanges, et/ou
- dans lequel l'épaisseur dudit revêtement est supérieure à 200 µm et inférieure à 1000 µm, et/ou
- dont la surface des parois intérieures est recouverte pour plus de 95% par ledit revêtement.

5. Conteneur selon l'une des revendications précédentes
- dans lequel l'épaisseur dudit revêtement est supérieure à 300 µm et inférieure à 800 µm, et/ou
- dont le revêtement s'étend sur sensiblement la totalité de la surface des parois intérieures dudit conteneur.

6. Conteneur selon l'une des revendications précédentes, comportant plus de 90%, de préférence plus de 95% en masse, d'oxyde(s).

7. Conteneur selon la revendication précédente comportant Al₂O₃, MgO, ZrO₂, SiO₂, Y₂O₃, et leurs mélanges.

8. Conteneur selon l'une des revendications précédentes présentant une teneur en Al₂O₃+MgO+ZrO₂+SiO₂+Y₂O₃ supérieure à 90%, de préférence supérieure à 95%, en pourcentage en masse sur la base des oxydes.

9. Conteneur selon l'une des revendications précédentes présentant
- une teneur en Al₂O₃ supérieure à 90%, de préférence supérieure à 95%, en pourcentage en masse sur la base des oxydes, ou
- une teneur en SiO₂ supérieure à 90%, de préférence supérieure à 95%, en pourcentage en masse sur la base des oxydes, ou
- une teneur en Al₂O₃ + MgO supérieure à 90%, de préférence supérieure à 95%, en pourcentage en masse sur la base des oxydes, ou
- une teneur en Al₂O₃ + Y₂O₃ supérieure à 90%, de préférence supérieure à 95%, en pourcentage en masse sur la base des oxydes, ou
- une teneur en Al₂O₃ + MgO + SiO₂ supérieure à 90%, de préférence supérieure à 95%, en pourcentage en masse sur la base des oxydes, ou
- une teneur en Al₂O₃ + ZrO₂+ SiO₂ supérieure à 90%, de préférence supérieure à 95%, en pourcentage en masse sur la base des oxydes, ou
- une teneur en Al₂O₃ + ZrO₂ supérieure à 90%, de préférence supérieure à 95%, en pourcentage en masse sur la base des oxydes, ou
- une teneur en Al₂O₃ + SiO₂ supérieure à 90%, de préférence supérieure à 95%, en pourcentage en masse sur la base des oxydes.

10. Conteneur selon l'une des revendications précédentes, comportant plus de 90%, de préférence plus de 95%, au total et en pourcentages sur la base de la masse totale des phases cristallisées, de corindon, de spinelle MgAl₂O₄, de cordiérite, de mullite, de zircone, optionnellement stabilisée, de périclase, et leurs mélanges.

11. Conteneur selon la revendication précédente, comportant plus de 90%, de préférence plus de 95%, au total et en pourcentages sur la base de la masse totale des phases cristallisées, de corindon ou de mullite ou d'un mélange de corindon et de cordiérite ou d'un mélange de corindon et de mullite ou d'un mélange de corindon et de spinelle MgAl₂O₄ ou d'un mélange de corindon et de cordiérite et de spinelle, ou d'un mélange de corindon et de zircone ou d'un mélange de corindon et de mullite et de zircone ou d'un mélange de cordiérite et de mullite.

12. Conteneur selon l'une des revendications 1 à 5, comportant plus de 90%, de préférence plus de 95% en masse, de carbure(s), de nitrure(s), d'oxynitrure(s), de borures et leurs mélanges.

13. Conteneur selon la revendication précédente, comportant plus de 90%, de préférence plus de 95% en masse, au total, de carbure(s), de nitrure(s), de SiAlON et leurs mélanges.

14. Conteneur selon la revendication précédente, comportant plus de 90%, de préférence plus de 95%, en masse et au total, de carbure de silicium, de nitrure de silicium, de SiAlON, et leurs mélanges.

15. Conteneur selon la revendication précédente, comportant plus de 90%, de préférence plus de 95%, en masse, d'un mélange de carbure de silicium et de nitrure de silicium.

16. Conteneur selon l'une des revendications précédentes,
- présentant un périmètre choisi parmi un polygone, un cercle ou une ellipse, et/ou
- comportant un fond et au moins un côté, de préférence présentant une épaisseur moyenne inférieure à 20 mm et supérieure à 2 mm, et/ou
- présente un volume supérieur à 0,1 litre et inférieur à 25 litres.

17. Conteneur selon l'une des revendications précédentes, pour la fabrication d'une poudre d'oxyde d'un métal ou de plusieurs métaux de transition lithiés.

## Patentansprüche

1. Behälter zur Herstellung eines lithiumhaltigen Oxidpulvers, bei dem die Innenwandoberfläche zumindest teilweise, vorzugsweise zu über 80 %, mit einer Beschichtung bedeckt ist, die die folgenden kristallisierten Phasen in Prozent bezogen auf die Gesamtmasse der kristallisierten Phasen aufweist:
- Spinell MgAl₂O₄: über 25 % und bis zu 60 %, und
- andere kristallisierte Phasen außer Spinell MgAl₂O₄ und Korund: < 10 %
- Korund: Ergänzung auf 100 %.

2. Behälter nach dem vorhergehenden Anspruch:
- wobei die Beschichtung bezogen auf die kristallisierten Phasen als Massenanteil in % einen Spinellgehalt von über 30 % und/oder unter 55 % aufweist, und/oder
- als Massenanteil über 90 % Oxid(e), Carbid(e), Nitrid(e), Oxynitrid(e), Borid(e) und Mischungen davon umfasst, und/oder
- wobei die Dicke der Beschichtung größer als 50 µm und kleiner als 2000 µm ist, und/oder
- dessen Oberfläche der Innenwände, die mit der Beschichtung bedeckt sind, den Boden des Behälters und den Teil der Seiten umfasst, der mit dem Boden in Kontakt steht, und/oder
- dessen Innenwandoberfläche zu über 85 % mit der Beschichtung bedeckt ist.

3. Behälter nach Anspruch 1 oder 2:
- wobei die Beschichtung bezogen auf die kristallisierten Phasen als Massenanteil in % einen Spinellgehalt von über 35 % und/oder unter 50 % aufweist, und/oder
- als Massenanteil über 95 % Oxid(e), Carbid(e), Nitrid(e), Oxynitrid(e), Borid(e) und Mischungen davon umfasst, und/oder
- wobei die Dicke der Beschichtung größer als 100 µm und kleiner als 1500 µm ist, und/oder
- dessen Innenwandoberfläche zu über 90 % mit der Beschichtung bedeckt ist.

4. Behälter nach einem der Ansprüche 1 bis 3:
- der als Massenanteil zu über 99 % Oxid(e), Carbid(e), Nitrid(e), Oxynitrid(e), Borid(e) und Mischungen davon umfasst, und/oder
- wobei die Dicke der Beschichtung größer als 200 µm und kleiner als 1000 µm ist, und/oder
- dessen Innenwandoberfläche zu über 95 % mit der Beschichtung bedeckt ist.

5. Behälter nach einem der vorhergehenden Ansprüche
- wobei die Dicke der Beschichtung größer als 300 µm und kleiner als 800 µm ist, und/oder
- wobei sich die Beschichtung im Wesentlichen über die gesamte Innenwandoberfläche des Behälters erstreckt.

6. Behälter nach einem der vorhergehenden Ansprüche, umfassend als Massenanteil über 90 %, vorzugsweise über 95 % Oxid(e).

7. Behälter nach dem vorhergehenden Anspruch umfassend Al₂O₃, MgO, ZrO₂, SiO₂, Y₂O₃, und Mischungen davon.

8. Behälter nach einem der vorhergehenden Ansprüche mit einem Gehalt an Al₂O₃+MgO+ZrO₂+SiO₂+Y₂O₃ von über 90 %, vorzugsweise über 95 %, als Massenanteil in % auf Oxidbasis.

9. Behälter nach einem der vorhergehenden Ansprüche mit
- einem Gehalt an A₂O₃ von über 90 %, vorzugsweise über 95 %, als Massenanteil in % auf Oxidbasis, oder
- einem Gehalt an SiO₂ von über 90 %, vorzugsweise über 95 %, als Massenanteil in % auf Oxidbasis, oder
- einem Gehalt an Al₂O₃ + MgO von über 90 %, vorzugsweise über 95 %, als Massenanteil in % auf Oxidbasis, oder
- einem Gehalt an Al₂O₃ + Y₂O₃ von über 90 %, vorzugsweise über 95 %, als Massenanteil in % auf Oxidbasis, oder
- einem Gehalt an Al₂O₃ + MgO + SiO₂ von über 90 %, vorzugsweise über 95 %, als Massenanteil in % auf Oxidbasis, oder
- einem Gehalt an Al₂O₃ + ZrO₂+ SiO₂ von über 90 %, vorzugsweise über 95 %, als Massenanteil in % auf Oxidbasis, oder
- einem Gehalt an Al₂O₃ + ZrO₂ von über 90 %, vorzugsweise über 95 %, als Massenanteil in % auf Oxidbasis, oder
- einem Gehalt an Al₂O₃ + SiO₂ von über 90 %, vorzugsweise über 95 %, als Massenanteil in % auf Oxidbasis.

10. Behälter nach einem der vorhergehenden Ansprüche, insgesamt und in Prozent bezogen auf die Gesamtmasse der kristallisierten Phasen umfassend über 90 %, vorzugsweise über 95 %, Korund, Spinell MgAl₂O₄, Cordierit, Mullit, Zirkon, optional stabilisiert, Periklase und Mischungen davon.

11. Behälter nach dem vorhergehenden Anspruch, insgesamt und in Prozent bezogen auf die Gesamtmasse der kristallisierten Phasen umfassend über 90 %, vorzugsweise über 95 %, Korund oder Mullit oder eine Mischung aus Korund und Cordierit oder eine Mischung aus Korund und Mullit oder eine Mischung aus Korund und Spinell MgAl₂O₄ oder eine Mischung aus Korund und Cordierit und Spinell oder eine Mischung aus Korund und Zirkon oder eine Mischung aus Korund und Mullit und Zirkon oder eine Mischung aus Cordierit und Mullit.

12. Behälter nach einem der Ansprüche 1 bis 5, umfassend als Massenanteil über 90 %, vorzugsweise über 95 % Carbid(e), Nitrid(e), Oxynitrid(e), Boride und Mischungen davon.

13. Behälter nach dem vorhergehenden Anspruch, umfassend als Massenanteil über 90 %, vorzugsweise über 95 % Carbid(e), Nitrid(e), SiAlON und Mischungen davon.

14. Behälter nach dem vorhergehenden Anspruch, umfassend als Massenanteil und insgesamt über 90 %, vorzugsweise über 95 %, Siliziumcarbid, Siliziumnitrid, SiAlON und Mischungen davon.

15. Behälter nach dem vorhergehenden Anspruch, umfassend als Massenanteil über 90 %, vorzugsweise über 95 % eine Mischung aus Siliziumkarbid und Siliziumnitrid.

16. Behälter nach einem der vorhergehenden Ansprüche,
- mit einem Umfang, der aus einem Polygon, einem Kreis oder einer Ellipse ausgewählt ist, und/oder
- umfassend einen Boden und mindestens eine Seite, vorzugsweise mit einer durchschnittlichen Dicke von unter 20 mm und über 2 mm, und/oder
- mit einem Volumen von über 0,1 Liter und unter 25 Liter.

17. Behälter nach einem der vorhergehenden Ansprüche zur Herstellung eines Oxidpulvers aus einem oder mehreren lithiierten Übergangsmetallen.

## Claims

1. A container for manufacturing an oxide powder comprising lithium, the surface of the inner walls thereof is at least partially covered, preferably by more than 80%, with a coating having the following crystalline phases, as a percentage and based on the total weight of the crystalline phases:
- MgAl₂O₄ spinel: more than 25% and up to 60%, and
- Crystalline phases other than MgAl₂O₄ spinel and corundum: < 10%
- Corundum: supplemented to 100%.

2. The container according to the preceding claim:
- wherein the coating has, as a weight percentage based on the crystalline phases, a spinel content greater than 30% and/or less than 55%, and/or
- comprising more than 90%, by weight, of oxide(s), carbide(s), nitride(s), oxynitride(s), boride(s), and mixtures thereof, and/or
- wherein the thickness of said coating is greater than 50 µm and less than 2000 µm, and/or
- wherein the surface of the inner walls covered by said coating comprises the bottom of said container and the part of the sides being in contact with said bottom, and/or
- the surface of the inner walls thereof is covered by more than 85% with said coating.

3. The container according to claim 1 or 2:
- wherein the coating has, as a weight percentage based on the crystalline phases, a spinel content greater than 35% and/or less than 50%, and/or
- comprising more than 95%, by weight, of oxide(s), carbide(s), nitride(s), oxynitride(s), boride(s), and mixtures thereof, and/or
- wherein the thickness of said coating is greater than 100 µm and less than 1500 µm, and/or
- the surface of the inner walls thereof is covered by more than 90% with said coating.

4. The container according to one of claims 1 to 3:
- comprising more than 99%, by weight, of oxide(s), carbide(s), nitride(s), oxynitride(s), boride(s), and mixtures thereof, and/or
- wherein the thickness of said coating is greater than 200 µm and less than 1000 µm, and/or
- the surface of the inner walls thereof is covered by more than 95% with said coating.

5. The container according to one of the preceding claims
- wherein the thickness of said coating is greater than 300 µm and less than 800 µm, and/or
- the coating thereof extends substantially over the entire surface of the inner walls of said container.

6. The container according to one of the preceding claims, comprising more than 90%, preferably more than 95% by weight, of oxide(s).

7. The container according to the preceding claim, comprising Al₂O₃, MgO, ZrO₂, SiO₂, Y₂O₃, and mixtures thereof.

8. The container according to one of the preceding claims, having an Al₂O₃+MgO+ZrO₂+SiO₂+Y₂O₃ content greater than 90%, preferably greater than 95%, as an oxide weight percentage.

9. The container according to one of the preceding claims, having
- an Al₂O₃ content greater than 90%, preferably greater than 95%, as an oxide weight percentage, or
- an SiO₂ content greater than 90%, preferably greater than 95%, as an oxide weight percentage, or
- an Al₂O₃ + MgO content greater than 90%, preferably greater than 95%, as an oxide weight percentage, or
- an Al₂O₃ + Y₂O₃ content greater than 90%, preferably greater than 95%, as an oxide weight percentage, or
- an Al₂O₃ + MgO + SiO₂ content greater than 90%, preferably greater than 95%, as an oxide weight percentage, or
- an Al₂O₃ + ZrO₂ + SiO₂ content greater than 90%, preferably greater than 95%, as an oxide weight percentage, or
- an Al₂O₃ + ZrO₂ content greater than 90%, preferably greater than 95%, as an oxide weight percentage, or
- an Al₂O₃ + SiO₂ content greater than 90%, preferably greater than 95%, as an oxide weight percentage.

10. The container according to one of the preceding claims, comprising more than 90%, preferably more than 95%, in total and as a percentage based on the total weight of the crystalline phases, of corundum, MgAl₂O₄ spinel, cordierite, mullite, zirconia, optionally stabilized, periclase, and mixtures thereof.

11. The container according to the preceding claim, comprising more than 90%, preferably more than 95%, in total and as a percentage based on the total weight of the crystalline phases, of corundum or mullite or a mixture of corundum and cordierite or a mixture of corundum and mullite or a mixture of corundum and MgAl₂O₄ spinel or a mixture of corundum and cordierite and spinel, or a mixture of corundum and zirconia or a mixture of corundum and mullite and zirconia or a mixture of cordierite and mullite.

12. The container according to one of claims 1 to 5, comprising more than 90%, preferably more than 95% by weight, of carbide(s), nitride(s), oxynitride(s), borides and mixtures thereof.

13. The container according to the preceding claim, comprising more than 90%, preferably more than 95% by weight, in total, of carbide(s), nitride(s), SiAlON and mixtures thereof.

14. The container according to the preceding claim, comprising more than 90%, preferably more than 95%, by weight and in total, of silicon carbide, silicon nitride, SiAlON, and mixtures thereof.

15. The container according to the preceding claim, comprising more than 90%, preferably more than 95%, by weight, of a mixture of silicon carbide and silicon nitride.

16. The container according to one of the preceding claims,
- having a perimeter chosen from a polygon, a circle or an ellipse, and/or
- comprising a bottom and at least one side, preferably having an average thickness of less than 20 mm and greater than 2 mm, and/or
- has a volume greater than 0.1 liters and less than 25 liters.

17. The container according to one of the preceding claims, for manufacturing an oxide powder of a metal or of several lithiated transition metals.
